Europäisches Patentamt

European Patent Office

Office européen des brevets

(19)

(11) Publication number: 0 372 185
A2

# EUROPEAN PATENT APPLICATION

(21) Application number: 89118004.4

(51) Int. Cl.⁵: G06F 12/02

(22) Date of filing: 28.09.89

The title of the invention has been amended (Guidelines for Examination in the EPO, A-III, 7.3).

(30) Priority: 13.10.88 US 257936

(43) Date of publication of application:
13.06.90 Bulletin 90/24

(84) Designated Contracting States:
DE FR GB IT

(71) Applicant: PIXAR
3210 Kerner Boulevard
San Rafael, CA 94901(US)

(72) Inventor: Molpus, J. Lane
716 Via Casitas
Greenbrae California 94904(US)
Inventor: Carpenter, Loren
82 Queva Vista
Novato California 94947(US)

(74) Representative: Zenz, Joachim Klaus,
Dipl.-Ing. et al
Patentanwälte Zenz, Helber & Hosbach Am
Ruhrstein 1
D-4300 Essen 1(DE)

(54) Method and apparatus for the storage and manipulation of three-dimensional data arrays.

(57) A memory system for storage and manipulation of three dimensional images is described. In the present invention, blocks of data, each representing an nxnxn cube of elements are stored in n memories. N elements may be simultaneously accessed adjacent in the X, Y or Z directions. Memory elements are written and accessed by using a rotation equal to f(X, Y, Z). In an alternate scheme, a square array of nxn elements adjacent in the XY, XZ, or YZ planes is simultaneously accessed. In this alternate embodiment, n² memories are provided with each memory representing a nominal XY array. The number of rotations required is a function of an access mode and starting coordinates.

EP 0 372 185 A2

## METHOD AND APPARATUS FOR STORAGE AND ACCESS OF THREE DIMENSIONAL DATA ARRAYS

## BACKGROUND OF THE INVENTION

### 1. Field of the Invention

This invention relates to the field of memory systems and in particular for storing three dimensional blocks of data.

### 2. Background Art

Mass storage of a computer is typically an array of smaller memory units. These smaller memory units may be actual physical memories themselves, such as a plurality of random access memories (RAM), erasable programmable read only memories (EPROM's), electronically erasable read only memories (EEPROM's) etc., or an electronic sub-division of a single large storage unit. The mass storage of a computer is normally a series of linearly adjacent memories.

A three dimensional block of data is comprised of an array of individual elements. Each element is defined by a unique address having an X,Y, and Z term. This block of data is to be stored in a series of individual memories. In the prior art, the three dimensional block of data is divided into a series of two dimensional planes, e.g. Y,Z planes. Each plane has a fixed X value in this example. For example, the first Y,Z plane contains all elements where X = 1. The second Y,Z plane contains all elements where X = 2, etc. Each Y,Z plane may then be stored in one of the memory arrays. The address of each memory corresponds to the X value of the plane stored therein. Correspondingly, the addresses of the memory elements within a memory array correspond to the Y,Z addresses of the data elements stored therein. If the block of data is an nxnxn array, it is easily seen that n memories are required with each memory being an nxn array of memory elements.

Certain applications require that relationships between data elements be maintained. For example, it may be desirable to view a one-dimensional array of data elements parallel with an axis of the three dimensional X,Y,Z coordinate system. It may also be desirable to view the image volume along a two dimensional plane (e.g. XZ, XY, or YZ).

In prior art memory systems, a single memory element may be accessed in a single clock cycle. With n memories, n elements may be accessed simultaneously in a single clock cycle. If each memory corresponds to a different X value, n elements adjacent in the X direction may be accessed in a single clock cycle. However, adjacent elements in the Y direction (where X and Z are fixed) or the Z direction (where Y and X are fixed) are contained in a single memory. Therefore, n clock cycles are required to retrieve. n adjacent elements in the Y or Z direction. For high speed memory applications, such as "real time" graphics applications and other memory intensive applications, the inability to retrieve n adjacent elements along any axis creates a performance bottleneck. To maximize efficiency so that adjacent elements may be accessed in a single clock cycle, it is necessary that no adjacent elements in the X, Y, or Z direction be stored in the same memory.

In other applications, it may be desirable to access an entire plane of data elements in a single clock cycle. With $n^2$ data elements in an n x n plane, $n^2$ memories are required to allow such simultaneous access. To achieve such simultaneous access for planes of data elements in the XY, YZ or XZ directions, it is a requirement that no co-planer data elements be stored in the same memory.

Therefore, it is an object to the present invention to provide a memory system in which blocks of data, each representing an nxnxn cube of elements, are stored in memory and n elements may be simultaneously accessed adjacent in the X,Y or Z directions.

It is a further object to the present invention to provide blocks of data, each representing an nxnxn cube of elements, stored in memory in which n by n elements adjacent in the XY, XZ, or YZ planes are accessed simultaneously.

It is yet another object of the present invention to provide a memory system in which memory elements adjacent in X, Y, Z, XY, XZ or YZ directions may be simultaneously accessed in a single memory access.

Other objects and attendant advantages of the present invention are apparent upon a reading of the following description of the invention together with the accompanying drawings.

## SUMMARY OF THE PRESENT INVENTION

A memory system for storage and manipulation of three dimensional images is described. In the present invention, blocks of data, each representing an nxnxn cube of elements, are stored in n memories, and n elements may be simultaneously accessed adjacent in the X, Y or Z directions. Memory elements are written and accessed by using a rotation scheme f(X, Y, Z). In an alternate scheme, a square array of nxn elements adjacent in the XY, XZ, or YZ planes is simultaneously accessed. In this alternate embodiment, $n^2$ memories are provided with each memory representing a nominal XY array. The number of rotations required is a function of the access mode, memory position, and starting coordinates.

The memory system of the present invention permits n adjacent data elements in the X, Y or Z direction to be simultaneously accessed in a single clock cycle. When writing to the memories, data elements are rotated so that no adjacent elements are stored in the same memory. In the preferred embodiment, rotation is a function of the access mode and address co-ordinates. For example, for X access, the rotation is equal to $(Y + Z)$ modulo n. The rotation is done either to the right or to the left for writing operations and in the opposite direction for read operations.

Address calculation is performed in the same manner for both reading and writing operations. In the preferred embodiment, the memories are positioned nominally in X. For example, for X access, $A_M = Y + - (Z)(n)$. For Y access, $A_M = (m + (n-X) + (n-Z)$ modulo $n + (Z)(n)$. For Z access, $A_M = Y + ((M + (n-X) + (n-Y))$ modulo n)(n).

An alternate embodiment permits n x n data elements adjacent in a coordinate plane to be accessed simultaneously in a single clock cycle. In this alternate embodiment, $n^2$ memories are provided, with each memory being an nx n array of memory elements. In this embodiment, the $n^2$ memories are considered to be a nominal XY array where J equals the nominal X position and K equals the nominal Y position. When performing a writing operation, both the J and K elements must be rotated so that no co-planar elements are stored in the same memory. During a writing operation, each column J is rotated in a downward direction and each row K is rotated to the right. During a reading operation, the column J is rotated in an upward direction and the row K is rotated to the left. It is apparent that such convention may be reversed for J and K without departing from the scope of the present invention.

Addresses are calculated as a function of the access mode, memory nominal XY position, and coordinate. In this alternate embodiment, for example, for XY access, $a_{j,k} = Z$. For XZ access, $a_{j,k} = (k + (n-Y))$ modulo n. It is apparent, though, that any plane may be chosen as the nominal plane (e.g. XZ, YZ).

In operation, the input and output of each memory is coupled to a multiplexer to rotate the data. Each multiplexer is controlled by control logic to implement the rotation as desired.

## BRIEF DESCRIPTION OF THE DRAWINGS

Figure 1 is a block diagram illustrating an nxnxn cube of elements.

Figure 2 is a block diagram of n memories.

Figure 3 is a block diagram illustrating a square array of memories.

Figure 4 is a block diagram illustrating the preferred embodiment of the memory scheme of the present invention for a square array of memory.

Figure 5 is a block diagram illustrating a prior art memory scheme.

Figures 6A-6C are block diagrams illustrating a prior art method of storing a 3 x3x3 data array.

Figures 7A-7C are block diagrams illustrating the present method of storing a 3x3x3 data array.

Figure 8 is a block diagram of the preferred embodiment of the present invention for a linear array of memories.

## DETAILED DESCRIPTION OF THE PRESENT INVENTION

A memory system for manipulating three dimensional blocks of data and for simultaneously accessing adjacent rows and planes of data is described. In the following description, numerous specific details, such as access orientation, etc., are set forth to provide a more thorough description of the present invention. It will be apparent, however, to one skilled in the art, that the present invention may be practiced without these specific details. In other instances, well known features have not been described in detail in order not to unnecessarily obscure the present invention.

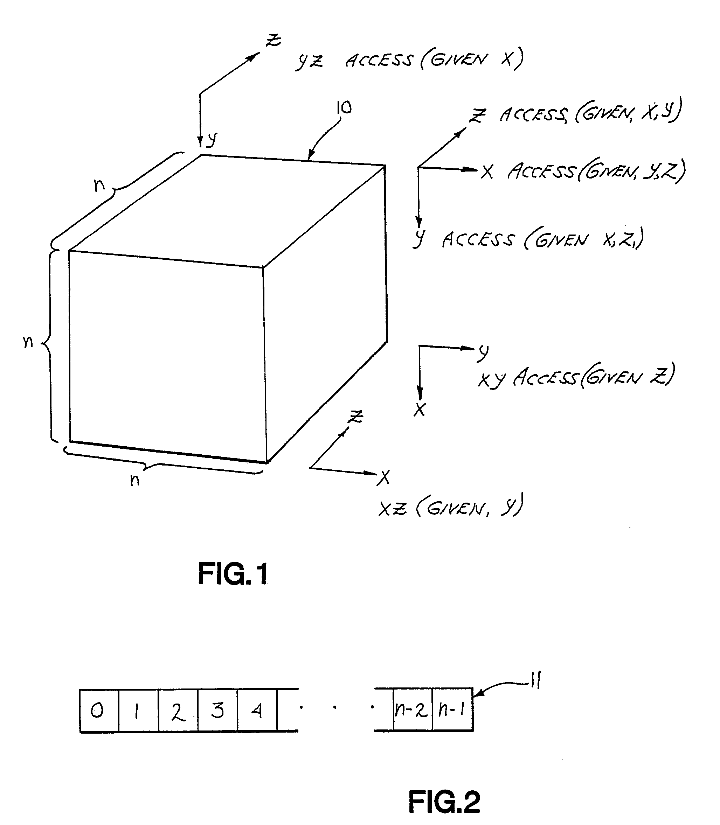

Referring to figure 1, it is desired to store an nxnxn cube of data in the memory system of the present invention. If we assume that the edges of the cubic array 10 lie on the axes of an imaginary XYZ coordinate system, then each data element of the memory system can be defined by a unique XYZ address. In one embodiment of the present invention, the cubic array of data 10 is stored in n memories, with each memory M comprising an nxn array of memory elements.

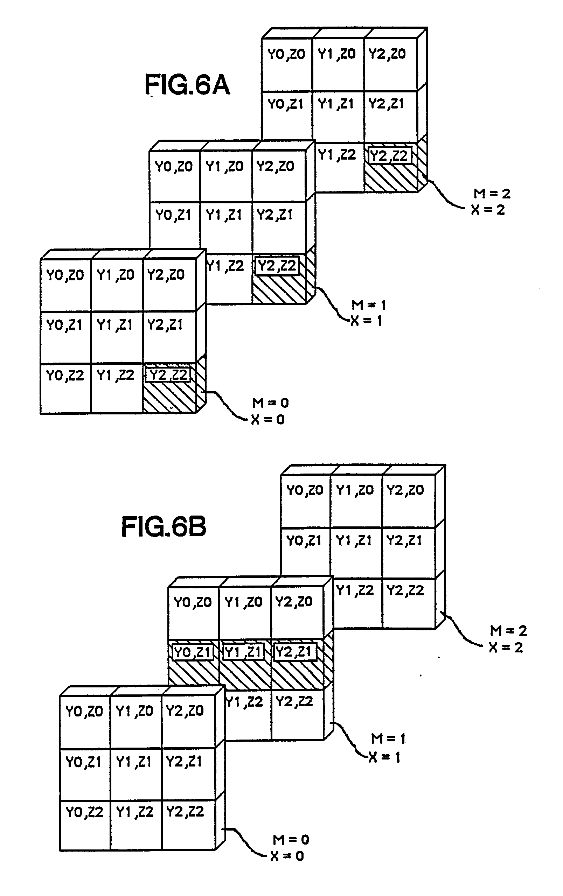

As shown in Figure 5, the block of data 10 is divided into a series of YZ planes each having a given X value. The YZ plane X = 0 is stored in memory $M_0$, the YZ plane where X = 1 is stored in memory $M_1$ etc. A disadvantage of this prior art system is its inability to simultaneously access data elements adjacent in the Y or Z directions. One element from each memory $M_0$-$M_{n-1}$ can be accessed in each memory cycle. Therefore, n elements adjacent in the X direction (where Y and Z are fixed) may be accessed in a single memory cycle. However, to access n adjacent elements in the Y direction (where X and Z are fixed) would require n memory cycles of a single memory M. Similarly, accessing n adjacent elements in the Z direction (where X and Y are fixed) would require n memory cycles.

Thus, prior art memory systems configure the n memories M so that a YZ plane of data is stored in each memory $M_n$ so that $X_n$ is equal to $M_n$. In other words, each value of X is found in one and only one memory M while each value of Y and Z is found in each memory M.

This is illustrated in figures 6A-6C. By way of example, a3x3x3 data cube is shown stored in the memories $M_0$, $M_1$ and $M_2$. As noted, each memory is a nominal YZ plane so that $M_n = X_n$. Therefore, memories $M_0$, $M_1$ and $M_2$ correspond to X values of 0, 1 and 2 respectively. Within any single memory M, only Y and Z values are needed to define each memory element.

Access of data elements adjacent in the X direction when values of Y and Z are fixed may be accomplished in a single memory cycle, remembering that only one memory element per memory may be accessed per memory cycle. For example, if Y and Z have fixed values Y2 and Z2, all adjacent X elements ($X_0$, $X_1$, and $X_2$) may be accessed simultaneously in a single memory cycle, one each from memories $M_0$, $M_1$, and $M_2$ respectively. As shown in Figure 6A, the memory locations for adjacent X elements when Y = 2 and Z = 2 are shaded and are located in different memories.

However, such is not the case for data elements adjacent in the Y and/or Z directions. Letting the value of X be fixed equal to 1, and the value of Z fixed at $Z_1$, adjacent elements in the Y direction are all contained within a single memory. Referring now to Figure 6B, when X = 1 and Z = 1, the adjacent Y elements, shown as the shaded memory locations in Figure 6B, are all located in memory $M_1$. Thus, it would take three memory cycles to retrieve those adjacent data elements.

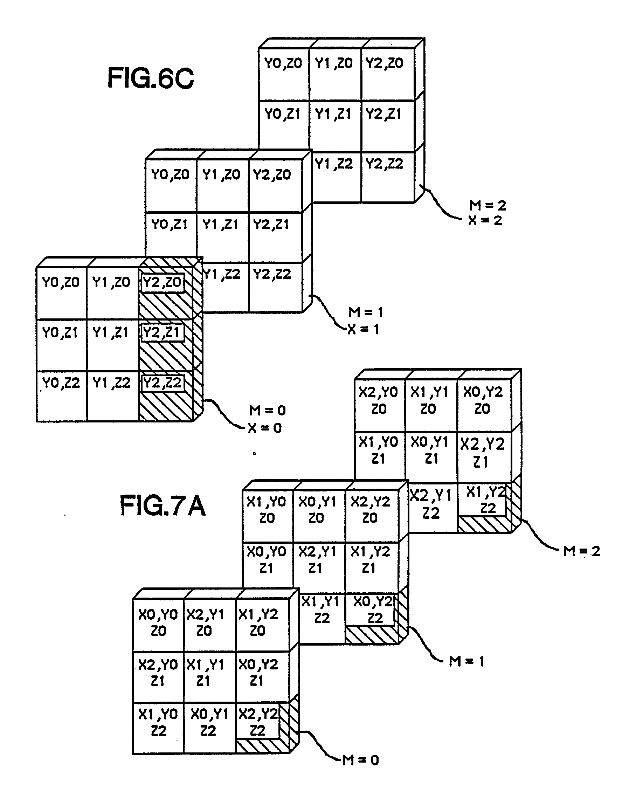

Likewise, letting X = 0, and Y = 2, all adjacent Z elements are contained in memory $M_0$, again requiring three separate memory cycles for access. These adjacent Z elements are shaded in Figure 6C.

The present invention provides a memory system in which n adjacent memory elements in the X, Y, or Z direction can be accessed in a single memory cycle. This is accomplished by rotating data elements relative to the memories when writing to the memories and when retrieving from the memories. The result is that each address X, Y and Z is found in one and only one memory M, containing no adjacent element.

To write n data elements, the elements are first rotated relative to the memories. In the data block 10, n adjacent data elements are described as follows:

$D_0$, $D_1$, $D_2$,●●●$D_{n-2}$, $D_{n-1}$

After a single rotation, the list appears as follows:

$D_{n-1}$, $D_0$, $D_1$ ●●●$D_{n-3}$, $D_{n-2}$

A rotation of n-1 is as follows:

$D_1$, $D_2$, $D_3$●●●$D_{n-1}$, $D_0$

The number of rotates is a function of the access mode (X, Y, or Z directions) and address coordinates (Y, Z for X access; X, Z for Y access; and X, Y for Z access.)

For X access:

Rotate = ((Y + Z) modulo n) right

For Y access:

Rotate = ((X + Z) modulo n) right

For Z access:

Rotate = ((X + Y) modulo n) right

In order to read n adjacent elements from memory, they are rotated back into their original positions.

For X access:

rotate = ((Y + Z) modulo n left)

For Y access:

rotate = ((X + Z) modulo n) left

4

For Z access:

rotate = ((X + Y) modulo n) left.

For purposes of this discussion, it is assumed that for write operations a right rotation is performed. Correspondingly, with read operations, a left rotation is performed. However, it is apparent that the directions of rotation could be reversed, with appropriate modification to the address equations, without departing from the scope of the present invention.

The address calculation for each memory M is the same for reads and writes and is a function of access mode, memory position and data coordinates. For purposes of the present invention, the memories M are positioned nominally in X so that $M_n = X_n$. However, it will be apparent that any axis may be chosen as the nominal axis without departing from the scope of the present invention.

Address calculation $(A_M)$ is as follows:

For X access:

$A_M = Y + (Z)(n).$

For Y access:

$A_M = (M + (n - X) + (n - Z))$ modulo $n + (Z)(n).$

For Z access:

$A_M = Y + ((M + (n - X) + (n - Y))$ modulo $n)(n).$

Although the second term in each equation is scaled by n in the above description, it is apparent that either the first or second term may be scaled by n.

The memory arrays of Figures 6A-6C may be reconfigured using the present invention so that all adjacent elements in the X, Y and Z directions may be accessed simultaneously. Although the memories are illustrated as arrays, for purposes of this example, it is assumed the memories are linear, with memory locations beginning at location 0 in the upper left hand corner, location 2 is in upper right corner, and ending at location 8 in the lower right hand corner. Memory address locations may be calculated for different values of X given fixed Y and Z values utilizing the formulas outlined above. For example, when Y = 1 and Z = 2, the rotation of memory is given by (Y + Z) modulo n right, or (1 + 2) modulo 3 right, which equals 0 rotation right. Therefore, when Y = 1 and Z = 2, X0, X1 and X2 are in memories 0,1 and 2 respectively. The location of X in each memory is given by Y + (Z) (n) or 1 + 2(3) or location 7. The following table illustrates the calculation for the entire 3x3x3 array as follows:

| Y(n) | Z(n) | M(X = 0) | M(X = 1) | M(X = 2) | A(X) |
|------|------|----------|----------|----------|------|
| Y0 | Z0 | 0 | 1 | 2 | 0 |
| Y0 | Z1 | 1 | 2 | 0 | 3 |
| Y0 | Z2 | 2 | 0 | 1 | 6 |
| Y1 | Z0 | 1 | 2 | 0 | 1 |
| Y1 | Z1 | 2 | 0 | 1 | 4 |
| Y1 | Z2 | 0 | 1 | 2 | 7 |
| Y2 | Z0 | 2 | 0 | 1 | 2 |
| Y2 | Z1 | 0 | 1 | 2 | 5 |
| Y2 | Z2 | 1 | 2 | 0 | 8 |

The memory assignments utilizing the above table are illustrated in Figures 7A-7C. In this arrangement, all adjacent elements in the X, Y or Z directions may be accessed simultaneously. Figures 7A-7C correspond to the examples illustrated in Figures 6A-6C respectively. The shaded memory locations of Figure 7A illustrate the locations of adjacent X elements where Y = 2 and Z = 2. As is shown, all values of X are in separate memories M.

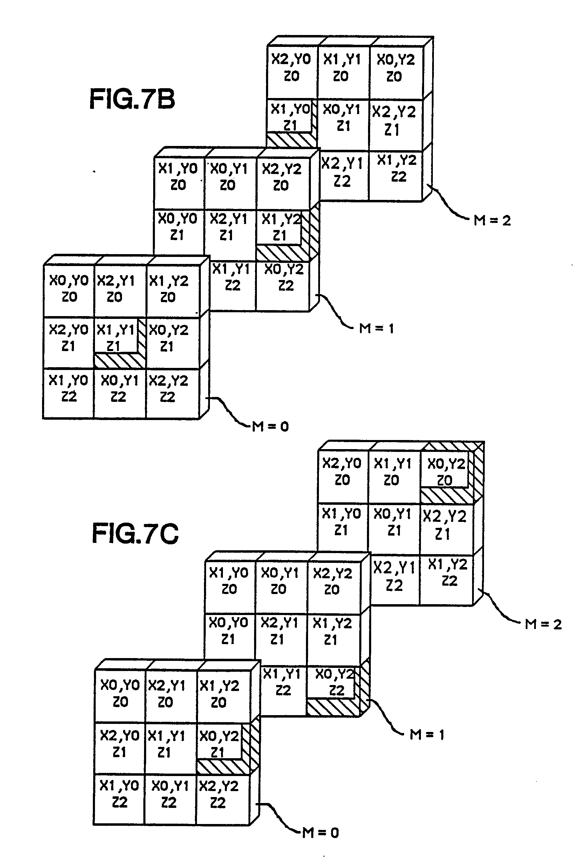

Figure 7B illustrates shaded memory locations where X = 1 and Z = 1. All adjacent Y values Y0-Y2 are in separate memories M. Referring briefly to Figure 6B, the same values of Y are located in the same memory $M_1$. Likewise, the shaded memory locations of Figure 7C illustrate the locations of adjacent Z elements where X = 0 and Y = 2. Again, all adjacent values of Z are in separate memories M.

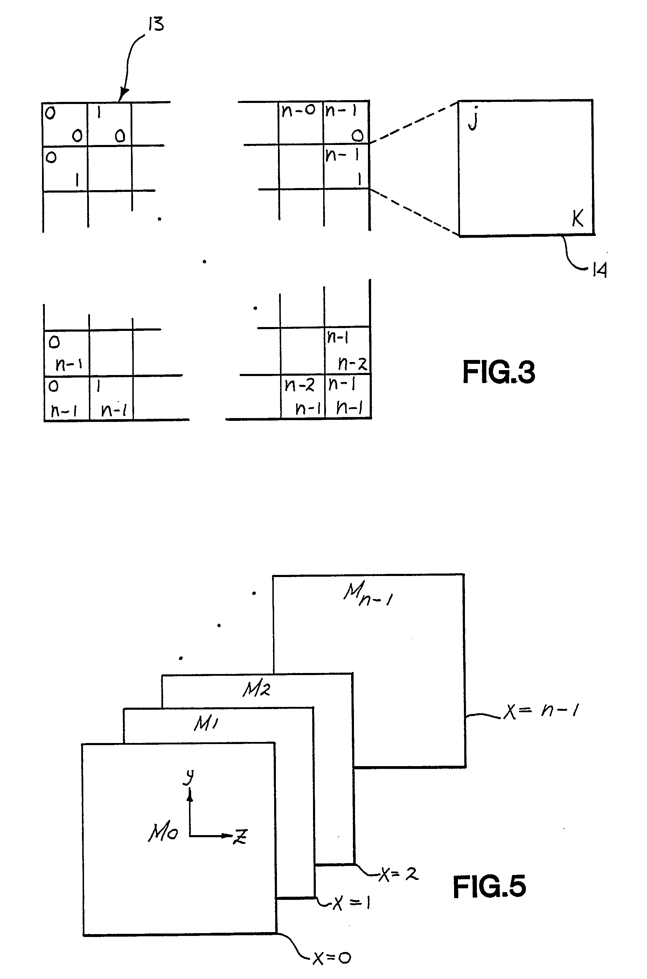

By providing additional memories, entire planes of data may be accessed in the XY, YZ, or XZ directions simultaneously. Referring to figure 3, an nxn array of memories M is illustrated. In the preferred embodiment of the present invention, the $n^2$ memories are considered to be a nominal XY array where J equals the nominal X position and K equals the nominal Y position. Such a configuration permits simultaneous access of square arrays of nxn elements adjacent in the XY, XZ or YZ directions. As with linearly adjacent accesses, the data elements must be rotated when written into and read from the memory

5

array. The number of rotates for each row and each column (J and K) are a function of the access mode (XY, XZ, or YZ) and memory position or Z coordinate. The rotation in this instance is a two step process. That is, both the columns, J, and the rows, K, must be rotated. For a write operation, the preferred embodiment of the present invention uses the convention of rotating each column J in a downward direction and each row K in the right direction. For a read operation, the column J is rotated in an upward direction and the row K is rotated in the left direction. However, alternatively, these directions may be switched, with an appropriate change in the equations, without departing from the scope of the present invention.

For XY access:

Rotate for row k = Z Right

Then rotate for column j = Z Down

For XZ access:

Rotate for row k = k Right

Then rotate for column j = Z Down

For YZ access:

Rotate for column j = j Down

Then rotate for row k = Z Right

In order to generate an address $(A_{J,K})$ for each memory, equations are calculated that take into account the access mode, memory nominal XY position (J, K) and coordinate. If desired, the memories could be positioned nominally in XZ or YZ.

For XY access:

$A_{J,K} = Z$

For XZ access:

$A_{J,K} = (K + (n - Y))$ modulo n

For YZ access:

$A_{J,K} = (J + (n - X))$ modulo n.

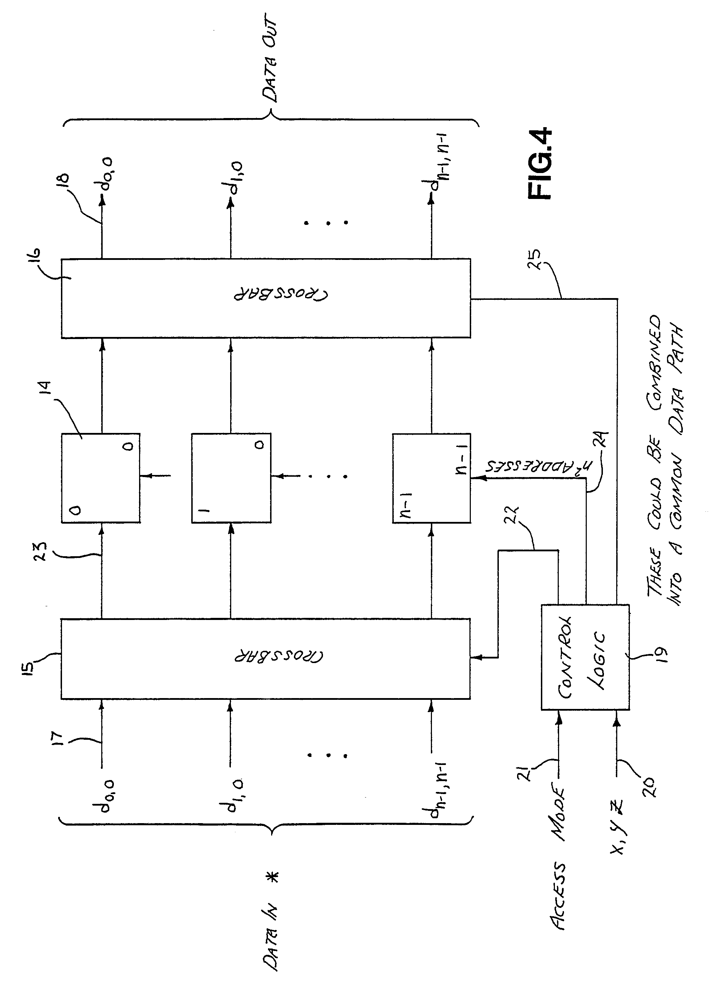

Referring now to figure 4, a block diagram illustrating the preferred configuration of the present invention for a square array of memories is illustrated. The data 17 comprising the nxnxn array is provided to a cross bar 15. For accessing adjacent planes, the data 17 represents planar information and cross bars 15 and 16 are two-stage arrays of barrel shifters.

The output of cross bar 15 is provided on lines 23 to a memories 14. To read data from the memory, the output of the memories is provided to cross bar 16. The output 18 of crossbar 16 represents the desired data. Control logic 19 is utilized to provide access mode and address information to cross bars 15, 16 and memories 14. Control logic is provided on line 22 to cross bar 15, line 24 to memories 14 and line 25 to cross bar 16.

In this embodiment, the cross bars 15 and 16 are coupled to $n^2$ memories so that a plane of elements adjacent in the XY, YZ or XZ planes may be accessed.

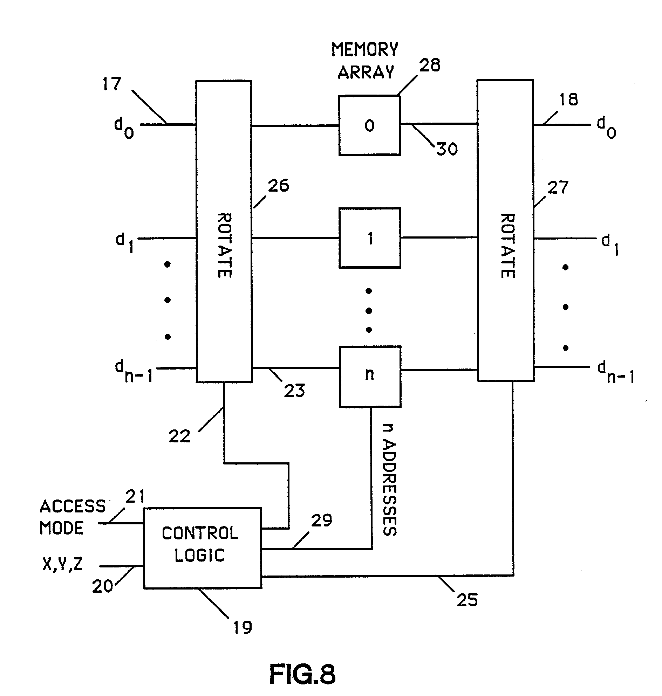

Referring now to figure 8, a block diagram illustrating the preferred configuration of the present invention for a linear array of memory is illustrated. Data 17 $(D_0-D_{n-1})$ is rotated in an n bit barrel shifter 26. The rotated data is output on lines 23 to the memory array 28. To access the system memory array, the data 30 is "unrotated" with n bit barrel shifter 27 to produce data output 18. The rotation of the data in crossbars 26 and 27 is controlled by control logic 19 as a function of the access mode 21 and the X, Y, Z coordinates 20. The data rotation set forth in the equations given above is controlled by signals on line 22 from control logic 19. The memory address is as calculated by the present equations as coupled on line 29 to the memory array 28. For reading data, rotation commands are coupled on line 25 to cross bar 27.

The cross bars in the present invention consist of barrel shifters. A barrel shifter is a combinatorial logic device having n inputs and up to n outputs. Parallel data is inputed to the barrel shifter, and rotated according to control signals. For example, for a rotate of 1, data in the nth location is moved to location 0, with all other data moving up one location (0 to 1, 1 to 2, ... n-1 to n). The output of the barrel shifter is thus "rotated" data. In the present invention, control logic 19 determines the amount of rotation necessary depending on the access mode and X, Y, Z coordinates. For a 3x3x3 array illustrated in figures 6A-6B and 7A-7C, the possible rotations are 0, 1, and 2. When data is read from the memories, the possible rotations are also 0, 1, or 2 and the output barrel shifter rotates the data so that the output is in its original form. Barrel shifters are employed in the present invention, though another suitable means of rotating data may be employed without departing from the scope of the present invention.

Thus, an improved method and apparatus for storage and access of three dimensional data arrays has been described.

**Claims**

1. A method for storage and manipulation of a block of data representing an nxnxn array of data elements defined by an X, Y and Z coordinate system comprising the steps of:

assigning addresses to elements of said data array corresponding to a location in said X Y Z coordinate system;

storing said elements in n memories, each memory storing $n^2$ elements of said data;

rotating said data elements in a first direction when writing data to said memories such that each address value of X, Y and Z is found in only a single of said memories, wherein n adjacent data elements in one of an X Y and Z direction may be accessed simultaneously;

rotating said data elements in a second direction when reading data from said memories, said second direction being opposite to said first direction.

2. The method of claim 1 wherein said memories are defined as being nominally coincident with the X axis of said X Y Z coordinate system.

3. The method of claim 2 wherein said data elements are rotated when writing to said memories as follows:

for X access:

rotate = ((Y + Z) modulo n) in said first direction

for Y access:

rotate = ((X + Z) modulo n) in said first direction

for Z access:

rotate = ((X + Y) modulo n) in said first direction.

4. The method of claim 3 wherein said data elements are rotated when reading from said memories as follows:

for X access:

rotate = ((Y + Z) modulo n) in said second direction ·

for Y access:

rotate =((X + Z) modulo n) in said second direction

for Z access:

rotate = ((X + 1) modulo n) in said second direction.

5. The method of claim 4 wherein said first direction is right.

6. The method of claim 4 further including the step of calculating an address $A_M$ for each memory as follows:

for X access:

$A_M$ = Y + (Z) (n).

for Y access:

$A_M$ = (M + (n - X) + (n - Z)) modulo n + (Z) (n).

for Z access:

$A_M$ = Y + (((M + (n - X) + (n - Y)) modulo n) (n))

7. A method for storage and manipulation of a block of data representing an nxnxn array of elements defined by an X, Y and Z coordinate system comprising the steps of:

assigning an address to each of said elements of said data array corresponding to a location in said X Y Z coordinate system;

storing said elements in $n^2$ memories, each memory storing n elements of said data;

rotating said data elements in a first and second direction when writing data to said memories such that each address value of X, Y and Z is found in only a single of said memories, wherein $n^2$ adjacent data elements in one of an XY, YZ and XZ plane may be accessed simultaneously;

rotating said data elements in a third and fourth direction when reading data from said memories, said third direction being opposite to said first direction, and said fourth direction being opposite to said second direction.

8. The method of claim 7 wherein said memories are defined as being nominally coincident with an XY plane of said X Y Z coordinate system.

9. The method of claim 8 wherein said data elements are rotated when writing to said memories by first rotating each column J in said first direction and then rotating each row K in said second direction, where J represents a nominal X position and K represents a nominal Y position.

10. The method of claim 9 wherein said data elements are rotated when reading from said memories by first rotating each column J in said third direction and then rotating each row K in said fourth direction.

11. The method of claim 10 further including the step of calculating an address $A_{J,K}$ for each memory

7

as follows:

for XY access:'

$A_{J,K} = Z$

for XZ access:

$A_{J,K} = (K + (n - Y))$ modulo n

for YZ access:

$A_{J,K} = (J + (n - X))$ modulo n.

12. The method of claim 11 wherein said first direction is down and said second direction is right.

FIG. 1

FIG. 2

FIG.3

FIG.5

**DATA IN** *

17 15 23 14 16 18

$d_{0,0}$

| 0 | |
| | 0 |

$d_{0,0}$

$d_{1,0}$

| 1 | |
| | 0 |

$d_{1,0}$

CROSSBAR

CROSSBAR

**DATA OUT**

$d_{n-1,n-1}$

| n-1 | |
| | n-1 |

$d_{n-1,n-1}$

21

**ACCESS MODE**

22

CONTROL LOGIC

$n^2$ ADDRESSES

24

25

X, Y Z

20

19

THESE COULD BE COMBINED INTO A COMMON DATA PATH

**FIG.4**

EP 0 372 185 A2

FIG.6A

| Y0,Z0 | Y1,Z0 | Y2,Z0 |
| Y0,Z1 | Y1,Z1 | Y2,Z1 |
| | Y1,Z2 | Y2,Z2 |

M = 2
X = 2

| Y0,Z0 | Y1,Z0 | Y2,Z0 |
| Y0,Z1 | Y1,Z1 | Y2,Z1 |
| | Y1,Z2 | Y2,Z2 |

M = 1
X = 1

| Y0,Z0 | Y1,Z0 | Y2,Z0 |
| Y0,Z1 | Y1,Z1 | Y2,Z1 |
| Y0,Z2 | Y1,Z2 | Y2,Z2 |

M = 0
X = 0

FIG.6B

| Y0,Z0 | Y1,Z0 | Y2,Z0 |
| Y0,Z1 | Y1,Z1 | Y2,Z1 |
| | Y1,Z2 | Y2,Z2 |

M = 2
X = 2

| Y0,Z0 | Y1,Z0 | Y2,Z0 |
| Y0,Z1 | Y1,Z1 | Y2,Z1 |
| | Y1,Z2 | Y2,Z2 |

M = 1
X = 1

| Y0,Z0 | Y1,Z0 | Y2,Z0 |
| Y0,Z1 | Y1,Z1 | Y2,Z1 |
| Y0,Z2 | Y1,Z2 | Y2,Z2 |

M = 0
X = 0

**FIG.6C**

| | | |
|---|---|---|
| Y0,Z0 | Y1,Z0 | Y2,Z0 |
| Y0,Z1 | Y1,Z1 | Y2,Z1 |
| | Y1,Z2 | Y2,Z2 |

M = 2
X = 2

| | | |
|---|---|---|
| Y0,Z0 | Y1,Z0 | Y2,Z0 |
| Y0,Z1 | Y1,Z1 | Y2,Z1 |
| | Y1,Z2 | Y2,Z2 |

M = 1
X = 1

| | | |
|---|---|---|
| Y0,Z0 | Y1,Z0 | Y2,Z0 |
| Y0,Z1 | Y1,Z1 | Y2,Z1 |
| Y0,Z2 | Y1,Z2 | Y2,Z2 |

M = 0
X = 0

| | | |
|---|---|---|
| X2,Y0 Z0 | X1,Y1 Z0 | X0,Y2 Z0 |
| X1,Y0 Z1 | X0,Y1 Z1 | X2,Y2 Z1 |
| | X2,Y1 Z2 | X1,Y2 Z2 |

M = 2

**FIG.7A**

| | | |
|---|---|---|
| X1,Y0 Z0 | X0,Y1 Z0 | X2,Y2 Z0 |
| X0,Y0 Z1 | X2,Y1 Z1 | X1,Y2 Z1 |
| | X1,Y1 Z2 | X0,Y2 Z2 |

M = 1

| | | |
|---|---|---|
| X0,Y0 Z0 | X2,Y1 Z0 | X1,Y2 Z0 |
| X2,Y0 Z1 | X1,Y1 Z1 | X0,Y2 Z1 |
| X1,Y0 Z2 | X0,Y1 Z2 | X2,Y2 Z2 |

M = 0

FIG.7B

| X2,Y0 Z0 | X1,Y1 Z0 | X0,Y2 Z0 |
| X1,Y0 Z1 | X0,Y1 Z1 | X2,Y2 Z1 |
| | X2,Y1 Z2 | X1,Y2 Z2 |

| X1,Y0 Z0 | X0,Y1 Z0 | X2,Y2 Z0 |
| X0,Y0 Z1 | X2,Y1 Z1 | X1,Y2 Z1 |
| | X1,Y1 Z2 | X0,Y2 Z2 |

M = 2

| X0,Y0 Z0 | X2,Y1 Z0 | X1,Y2 Z0 |
| X2,Y0 Z1 | X1,Y1 Z1 | X0,Y2 Z1 |
| X1,Y0 Z2 | X0,Y1 Z2 | X2,Y2 Z2 |

M = 1

M = 0

FIG.7C

| X2,Y0 Z0 | X1,Y1 Z0 | X0,Y2 Z0 |
| X1,Y0 Z1 | X0,Y1 Z1 | X2,Y2 Z1 |
| | X2,Y1 Z2 | X1,Y2 Z2 |

| X1,Y0 Z0 | X0,Y1 Z0 | X2,Y2 Z0 |
| X0,Y0 Z1 | X2,Y1 Z1 | X1,Y2 Z1 |
| | X1,Y1 Z2 | X0,Y2 Z2 |

M = 2

| X0,Y0 Z0 | X2,Y1 Z0 | X1,Y2 Z0 |
| X2,Y0 Z1 | X1,Y1 Z1 | X0,Y2 Z1 |
| X1,Y0 Z2 | X0,Y1 Z2 | X2,Y2 Z2 |

M = 1

M = 0

FIG.8